## Europäisches Patentamt
## European Patent Office
## Office européen des brevets

(19)

(11) Veröffentlichungsnummer : **0 083 902**
**B1**

(12)

# EUROPÄISCHE PATENTSCHRIFT

(45) Veröffentlichungstag der Patentschrift :
27.07.88

(21) Anmeldenummer : 82730115.1

(22) Anmeldetag : 03.09.82

(51) Int. Cl.⁴ : **F 16 F 15/04**, F 01 D 25/28, F 16 M 7/00

(54) Verfahren zum Ausrichten der Wellen von elastisch aufgestellten Maschinen.

(30) Priorität : 11.01.82 DE 3200815

(43) Veröffentlichungstag der Anmeldung :
20.07.83 Patentblatt 83/29

(45) Bekanntmachung 'des Hinweises auf die Patenterteilung : 27.07.88 Patentblatt 88/30

(84) Benannte Vertragsstaaten :
FR GB IT

(56) Entgegenhaltungen :
DE-C- 727 537
GB-A- 1 125 171
US-A- 3 379 397
US-A- 4 048 842
US-A- 4 083 433
ELIN-ZEITSCHRIFT, Band 9, Nr. 2, Juni 1957, Seite 67, Wien, AT; "Die Neue Hochdruckdampfanlage der Kartonfabrik Frohnleiten"

(73) Patentinhaber : GERB Gesellschaft für Isolierung mbH & Co. KG
Roedernallee 174-176
D-1000 Berlin 51 (DE)

(72) Erfinder : Delam, Heinz
Blakenheideweg 3
D-1000 Berlin 20 (DE)

(74) Vertreter : Wey, Hans-Heinrich, Dipl.-Ing. et al
Patentanwälte Wey & Partner Widenmayerstrasse 49
D-8000 München 22 (DE)

EP 0 083 902 B1

## Beschreibung

Die Erfindung betrifft ein Verfahren gemäß dem Gattungsbegriff des Hauptanspruchs.

Bei der Aufstellung großer Maschinen, beispielsweise von Turbogeneratorsätzen, mit relativ langen, durchgehenden Wellensträngen mit mehreren Wellenlagern ist deren Ausrichtung ein wichtiger Teil der Arbeiten, die einen störungsfreien Betrieb und eine lange Lebensdauer gewährleisten. Nach dem bisherigen Stand der Technik werden Maschinen, die mehrfach gelagert sind und deren Wellenstrang sich aus mehreren Läufern oder Aggregaten zusammensetzt, auf folgende Weise montiert :

Bei getrennter Anlieferung von Läufer und Gehäuse werden erst die Lager zueinander ausgerichtet und nach dem Einlegen des Läufers beim Drehen mit einer Drehrichtung die Kupplungsfehler (z. B. Exzentrizität, Schlag) und das Lagerspiel zum Nachrichten herangezogen. Zeitweise werden auch die elastischen Elemente unter der Fundamentplatte zum Nachrichten des Wellenstranges in der Endmontage herangezogen. Ein Nachrichten des Wellenstranges über erzwungene Fundamentverformungen mit Hilfe der elastischen Stellelemente findet beim Betrieb der Anlage jedoch nicht statt.

Für den wirtschaftlichen Betrieb derartiger Anlagen ist es bedeutungsvoll, daß der bei Inbetriebnahme geforderte Zustand der Ausrichtung auch nach Wärmedehnungen des Fundaments möglichst lange beibehalten werden kann. Die Konstanz in der Ausrichtung ist dabei u.a. ausschlaggebend für die Dauer der Wartungsabstände, deren wirtschaftliche Bedeutung einen erheblichen Aufwand für die Überwachung des Ausrichtzustandes rechtfertigt.

Man ist deshalb dazu übergegangen, nicht nur die Laufruhe, sondern auch den Wellenzug selbst laufend zu überwachen und dabei auch die Ursachen von Veränderungen des Ausrichtzustandes in die Überwachung mit einzubeziehen. Die auf diesem Weg gewonnenen Erkenntnisse über das Systemverhalten von Welle und Fundament können aber nur Auswirkungen auf zukünftige Planungen von entsprechenden Montagen haben.

Bei elastischer Lagerung von Maschinen werden bei Verwendung von biegeelastischen Fundamentplatten unter diesen relativ hohe Lagerelastizitäten angeordnet, wodurch erreicht wird, daß die in der Maschine hervorgerufenen Schwingungen nicht über das Fundament in die Umgebung abgestrahlt werden.

Auf den elastischen Lagerungselementen, beispielsweise in Form von Federkörpern, nimmt die biegeelastische Fundamentplatte eine Biegelinie entsprechend den jeweiligen Lagerbedingungen ein. Da die Biegelinie von den Auflagerkräften abhängt, kann sie durch Veränderung dieser Auflagerkräfte korrigiert werden. Dies gilt entsprechend auch für die Verdrehung elastisch gestützter Platten und Rahmen.

Die ELIN-Zeitschrift, Band 9, Nr. 2, Juni 1957, Seite 67, Wien, AT, offenbart ein Verfahren zum Ausrichten der Wellen von elastisch auf biegeelastischen Fundamentplatten aufgestellten Maschinen mittels unter der Fundamentplatte angeordneter Federkörper durch laufende Überwachung der Laufruhe des Wellenzuges und Wiederherstellung der Laufruhe bei Abweichung durch Einstellung der Tragkraft der Federkörper.

Dieses bekannte Verfahren hat jedoch den Nachteil, daß die Einstellung der Laufruhe durch Änderung der Auflagerkräfte manuell erfolgen muß.

Der Erfindung liegt daher die Aufgabe zugrunde, ein Verfahren zu schaffen, mit dem auf zuverlässige und schnelle Art und Weise ein Ausrichten der Wellen eines Wellenzuges ermöglicht wird.

Zur Lösung dieser Aufgabe dienen die im Kennzeichen des Hauptanspruchs angegebenen Verfahrensschritte.

Bei dem erfindungsgemäßen Verfahren werden Abweichungen von der Laufruhe des Wellenzuges automatisch mittels Sensoren gemessen und kontinuierlich einem Prozeßrechner zur Verarbeitung zugeführt, der die Stellvorrichtungen für die Federkörper derart regelt, daß die Tragkraft einzelner, unter der Fundamentplatte befindlicher Federkörper solange verändert wird, bis die Laufruhe wieder hergestellt ist.

Eine elastische Lagerung besteht in der Regel aus mehreren Stützpunkten, in denen je Stützpunkt eine Gruppe von Lagerungselementen angeordnet ist. In vielen Fällen genügt die Ausrüstung eines Lagerungselements je Stützpunkt mit einer Nachstelleinrichtung, um den beschriebenen Effekt zu erzielen.

Durch Verwendung eines mikroprozessorüberwachten Meß- und Stellsystems ist die Möglichkeit gegeben, die Einflüsse der einzelnen Auflager-Veränderungen zu erfassen und durch einen Rechnerprozeß die Lagerungsbedingungen in bezug auf den Ausrichtzustand der Selbstoptimierung zugänglich zu machen.

Die so erzielbare Präzision schafft Betriebsbedingungen, die die Güte des Zustandes bei der Inbetriebnahme unbegrenzt lange bewahren, ja sogar übertreffen können.

Die vorbeschriebene Regelung mit hydraulisch betätigten Stellelementen bedingt eine ständige Bereitschaft der Hydraulik in den Stellelementen. Der Ausfall des hydraulischen Druckes würde als alleinige Konsequenz lediglich die Wiederherstellung des Zustandes bei der Inbetriebnahme bedeuten und keine Gefahr für die Anlage darstellen. Dies kann trotzdem unzulässig sein, wenn Bestimmungen entgegenstehen. Nach jeder Veränderung des Stellelementes muß in solchen Fällen die Fuge zwischen Fundamentplatte und Lagerungselement durch ein starres Zwischenstück überbrückt werden.

Durch die unterschiedlichen Elastizitäten von Fundament und Lagerungselementen sowie den Umstand, daß nur ein oder einige Elemente geregelt werden, können mit großen Stellwegen am Lagerungselement kleine Fundamentverformungen hervorgerufen werden. Von Hand vorgenommene Änderungen der Auflagerbedingungen haben gezeigt, daß eine Veränderung der Höhe der elastischen Elemente um mehrere Millimeter Abweichungen der Wellenlinie in der Größenordnung von Hundertstelmillimetern zur Folge hat. Die auf die Weise mit hoher Genauigkeit vorgenommene Aus- und Nachrichtung der Wellenlager bewirkt, daß Fundamentdeformationen den Laufzustand der Maschine nur noch minimal beeinflussen.

Weiterbildungen der Erfindung sind in den Unteransprüchen angegeben.

Der Gegenstand der Erfindung ist in der Zeichnung beispielsweise dargestellt und wird nachstehend ausführlich erläutert. Es zeigen :

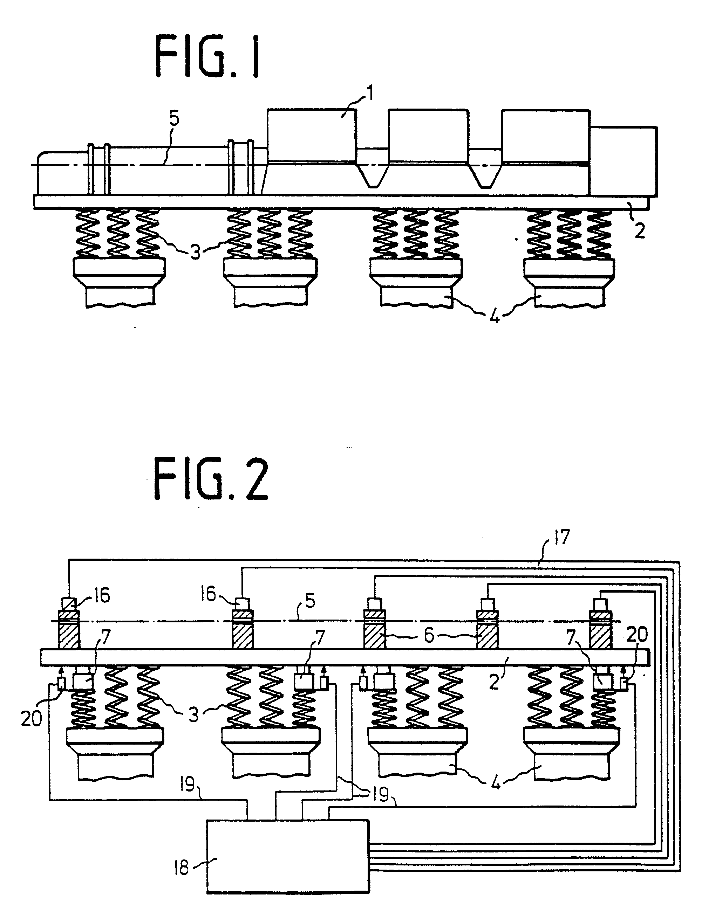

Fig. 1 eine schematische Längsansicht eines elastisch aufgestellten Turbogeneratorsatzes ;

Fig. 2 eine der Fig. 1 ähnliche Längsansicht mit Andeutung des Wellenzuges des Turbogeneratorsatzes, wobei die Lagerungselemente erfindungsgemäß ausgestaltet sind ;

Fig. 3 eine vergrößerte Einzelheit aus Fig. 2 ; und

Fig. 4 eine gegenüber Fig. 3 weiter vergrößerte Einzelheit der Erfindung.

Ein Turbogeneratorsatz 1 ist auf einer Fundamentplatte 2 aufgestellt. Zur elastischen Aufstellung des Turbosatzes 1 ist die im allgemeinen biegeelastische Fundamentplatte 2 auf an sich bekannten elastischen Federkörpern 3 gelagert, die ihrerseits auf Fundamentstützen 4 angeordnet sind. Ein Wellenzug 5 des Turbosatzes ist in Lagerböcken 6 gelagert, die ihrerseits auf der Fundamentplatte 2 aufgestellt sind.

Bei der erstmaligen Aufstellung des Turbosatzes 1 werden die Federkörper 3 entsprechend der Biegelinie der Fundamentplatte 2 vor dessen Aufbau für die zu erwartenden Betriebslasten vorgespannt. Dann wird die Fundamentplatte 2 in an sich bekannter Weise nachgespannt, so daß völlige Laufruhe des Wellenzuges 5 im Betrieb zu erwarten ist. Ein Nachspannen während des späteren Betriebes findet nicht statt, sondern das von Zeit zu Zeit erforderlich werdende Nachrichten erfolgt durch Ausrichten der Lagerböcke 6 o.dgl. während der Wartungen, d.h. beim Stillstand der Maschine.

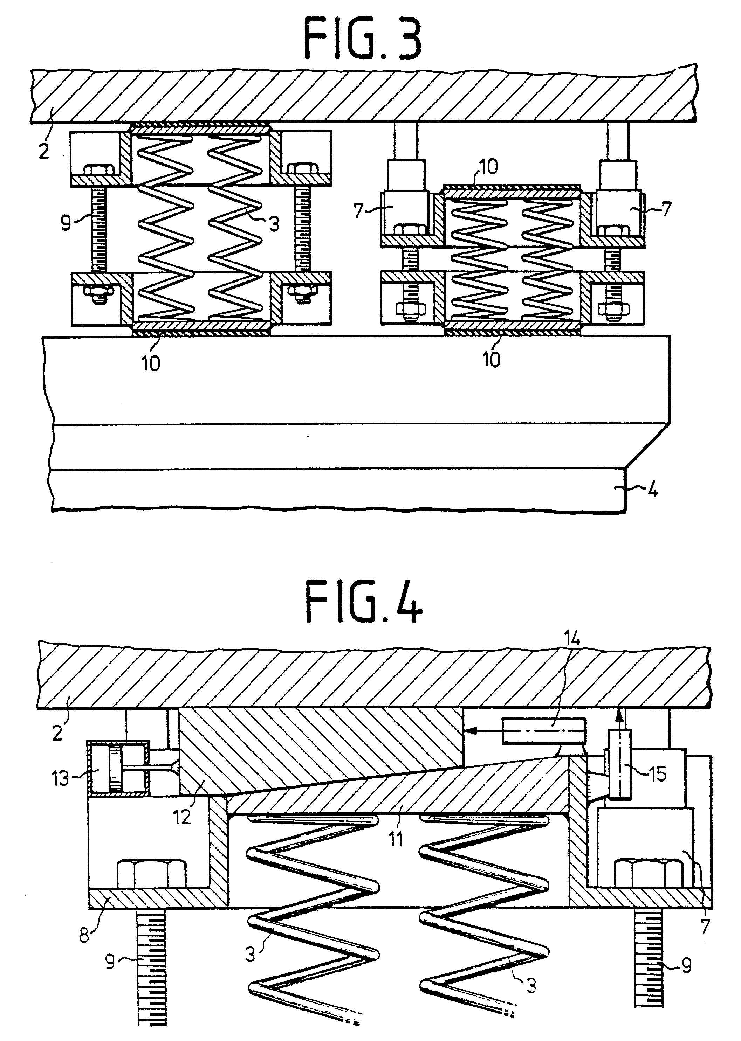

Gemäß der Erfindung sind in den Federkörpern 3 gesonderte Stelleinrichtungen 7 angebracht, die zum dauernden Verbleib sind und über eine Veränderung der Tragkräfte der Federkörper 3 eine Veränderung der Lagerungsbedingungen für den Wellenstrang 5 bewirken. Wie insbesondere Fig. 3 erkennen läßt, sind hydraulische Stelleinrichtungen 7 in der Federkörperschale 8 angeordnet, so daß eine gleichförmige Änderung der Tragkraft des Federkörpers 3 bei Betätigung der Steuereinrichtungen 7 erfolgt. Schrauben 9 dienen zur Vorspannung vor der Montage. Zwischenlagen 10 sorgen für eine einwandfreie, insbesondere rutschfeste, Verbindung zwischen Federkörper 3 und Fundamentplatte 2 bzw. Fundamentstützen 4.

Damit das Gewicht der Fundamentplatte 2 nicht unmittelbar auf den Stempeln der Stelleinrichtungen 7 aufliegt, ist eine feste Verbindung zwischen den Federkörpern 3 und der Fundamentplatte 2 über den ganzen Stellbereich mittels einer verstellbaren Keilverbindung 11, 12 vorgesehen, wie aus Fig. 4 ersichtlich ist. Eine die Federkörperschale 8 oben abschließende, keilförmig ausgebildete Platte 11 dient als schiefe Ebene für einen Keil 12.

Die Keilverbindung 11, 12 ist nachstellbar und wird durch Betätigung der Stelleinrichtung 7 gelöst. Ein Stellzylinder 13 übernimmt die notwendige Verstellung des Keils 12 in der als Blockiereinrichtung dienenden Keilverbindung. Die Keile tragen dabei die Fundamentplatte, wodurch die Stelleinrichtung 7 entlastet wird.

Eine Meßeinrichtung 14 dient zur Erfassung des Zustandes bzw. der Lage des Keils 12. Eine weitere Meßeinrichtung 15 dient zur Erfassung des Zustandes bzw. der Größe der Tragkraftveränderung des Federkörpers 3. Die entsprechenden Daten der Zustandsmelder 14 und 15 ermöglichen durch Anwendung bekannter Grundsätze der Prozeßrechnung eine ständige automatischen Nachrichtung des Wellenzuges 5 in Abhängigkeit von den auftretenden Zustandsänderungen.

Ein entsprechender Regelkreis ist in Fig. 4 angedeutet. Die Lagerböcke 6 sind mit Schwingungsgebern 16 ausgerüstet, die über Kanäle 17 Abweichungen z. B. von der Laufruhe des Wellenzuges 5 an einen Prozeßrechner 18 melden, der seinerseits entsprechende Befehle über Kanäle 19 an die Stellungsgeber bzw.

Weggeber 20 weiterleitet, um die Stelleinrichtungen 7 zu veranlassen, im vorbeschriebenen Sinn tätig zu werden.

**Patentansprüche**

1. Verfahren zum Ausrichten der Wellen von elastisch auf biegeelastischen Fundamentplatten (2) aufgestellten Maschinen mittels unter der Fundamentplatte (2) angeordneter Federkörper (3) durch laufende Überwachung der Laufruhe des Wellenzuges sowie Wiederherstellung der Laufruhe bei Abweichung durch Einstellung der Tragkraft der Federkörper (3), dadurch gekennzeichnet, daß Abweichungen von der Laufruhe des Wellenzuges (5) automatisch mittels Sensoren gemessen und kontinuierlich einem Prozeßrechner (18) zur Verarbeitung zugeführt werden, der die Stellvorrichtungen (7) für die Federkörper (3) derart regelt, daß die Tragkraft einzelner unter der Fundamentplatte (2) befindlicher Federkörper (3) solange verändert wird, bis die Laufruhe wieder hergestellt ist.

2. Verfahren nach Anspruch 1, dadurch gekennzeichnet, daß eine bestehende feste Verbindung der Fundamentplatte (2) mit dem Federkörper (3) für den Stellvorgang gelöst, während des Stellvorganges verändert und nach dem Stellvorgang wieder hergestellt wird.

3. Verfahren nach Anspruch 1 und 2, dadurch gekennzeichnet, daß zur Veränderung der Auflagerbedingungen hydraulische Elemente (7) eingesetzt werden.

4. Verfahren nach einem der Ansprüche 1 bis 3, dadurch gekennzeichnet, daß zur Veränderung der Auflagerbedingungen mechanische oder elektromechanische Vorrichtungen eingesetzt werden.

5. Verfahren nach Anspruch 4, dadurch gekennzeichnet, daß die Stellzustände elektrisch oder elektronisch erfaßt werden.

## Claims

1. Process for aligning the shafts of machines mounted resiliently on flexible base plates (2) by means of spring bodies (3) arranged beneath the base plate (2) by continuous monitoring of the smooth running of the shaft assembly and reestablishing smooth running when deviation occurs by adjustment of the carrying force of the spring bodies (3), characterised in that deviations from the smooth running of the shaft assembly (5) are measured automatically by means of sensors and are continuously fed to a process control computer (18) for processing, which regulates the adjustment devices (7) for the spring bodies (3) so that the carrying force of individual spring bodies (3) located underneath the base plate (2) is altered until smooth running is restored.

2. Process according to claim 1, characterised in that an existing firm connection of the base plate (2) to the spring body (3) is released for the adjustment process, altered during the adjustment process and is restored again after the adjustment process.

3. Process according to claim 1 and 2, characterised in that hydraulic elements (7) are used to alter the mounting conditions.

4. Process according to one of claims 1 to 3, characterised in that mechanical or electromechanical devices are used to alter the mounting conditions.

5. Process according to claim 4, characterised in that the positional states are sensed electrically or electronically.

## Revendications

1. Procédé d'alignement des arbres de machines installées élastiquement sur des plaques de fondation (2) élastiques en flexion, au moyen de corps élastiques (3) placés sous la plaque de fondation (2), par contrôle permanent de la stabilité de marche de la ligne d'arbres et rétablissement de cette stabilité de marche en cas d'écart par réglage de la force portante des corps élastiques (3), caractérisé en ce que les écarts de la marche stable de la ligne d'arbres (5) sont mesurés automatiquement par des capteurs et transmis de façon continue pour être traités à un calculateur de processus industriel (18) qui règle les dispositifs de réglage (7) des corps élastiques (3) de façon telle que la force portante de différents corps élastiques (3) situés sous la plaque de fondation (2) soit modifiée jusqu'à ce que la stabilité de marche soit rétablie.

2. Procédé selon la revendication 1, caractérisé en ce qu'une liaison fixe existante de la plaque de fondation (2) au corps élastique (3) est supprimée pour le réglage, modifiée pendant celui-ci et rétablie après celui-ci.

3. Procédé selon les revendications 1 et 2, caractérisé en ce que pour la modification des conditions d'appui, des éléments hydrauliques (7) sont utilisés.

4. Procédé selon l'une des revendications 1 à 3, caractérisé en ce que pour la modification des conditions d'appui on utilise des moyens mécaniques ou électromécaniques.

5. Procédé selon la revendication 4, caractérisé en ce que les états de réglage sont détectés électriquement ou électroniquement.

# FIG. 1

# FIG. 2

0 083 902

FIG.3

FIG.4